# EUROPÄISCHE PATENTANMELDUNG

(11) **EP 4 644 853 A1**
(43) Veröffentlichungstag der Anmeldung: **05.11.2025**
(21) Anmeldenummer: 25173580.9
(22) Anmeldetag: 30.04.2025
(51) Int. Cl.: G01J 5/00, G07C 9/00, G01J 5/34, G01J 5/02

(54) **FUNKIDENTIFIKATIONSEINHEIT UND ELEKTRONISCHES SCHLOSS HIERMIT**

(30) Priorität: 30.04.2024 DE 102024112172
(71) Anmelder: ASTRA Gesellschaft für Asset Management mbH & Co. KG, 30890 Barsinghausen (DE)
(72) Erfinder: Möller, Stefan, 30890 Barsinghausen (DE); Stobbe, Anatoli, 30890 Barsinghausen (DE)
(74) Vertreter: Gerstein, Hans Joachim

(57) **Zusammenfassung**

Die Erfindung betrifft eine Funkidentifikationseinheit (1) mit einem Funkidentifikationsempfänger (2) und einem mit dem Funkidentifikationsempfänger (2) verbundenen Näherungsdetektor (3), wobei der Näherungsdetektor (3) einen pyroelektrischen PIR-Sensor (25) zur Detektion der Annäherung eines im Umfeld des Funkidentifikationsempfängers (2) befindlichen Person hat und zur Aktivierung des Funkidentifikationsempfängers (2) bei detektierter Annäherung einer Person an den Näherungsdetektor (3) ausgebildet ist. Der PIR-Sensor (25) hat zwei horizontal nebeneinander angeordnete Sensorelemente (11a, 11b und/oder 11c, 11d) mit einer auf infrarote Wellen sensitiven Sensorfläche, die mit einer für infrarote Wellenlängen mindestens teilweise transparenten Abdeckung (10) überdeckt ist, wobei ein vertikaler Steg (13) zwischen dem Paar von Sensorelementen (11a, 11b bzw. 11c, 11d bzw. 11a, 11d) im Zwischenraum zwischen der Abdeckung und einer die Sensorelemente (11a, 11b, 11c, 11d) tragenden Plattform (12) des PIR-Sensors (25) angeordnet ist.

## Beschreibung

Die Erfindung betrifft eine Funkidentifikationseinheit mit einem Funkidentifikationsempfänger und einem mit dem Funkidentifikationsempfänger verbundenen Näherungsdetektors, wobei der Näherungsdetektor einen PIR-Sensor zur Detektion der Anwesenheit eines im Umfeld des Funkidentifikationsempfängers befindlichen Person hat und zur Aktivierung des Funkidentifikationsempfängers bei detektierter Annäherung einer Person an den Näherungsdetektor ausgebildet ist.

PIR-Sensoren sind pyroelektrische Sensoren bzw. passive Infrarotsensoren, die Sensorelemente aus pyroelektrischem Material in Form eines dünnen polarisierten Kristalls aufweisen. Auf das pyroelektrische Material auftreffende Wärmestrahlung im infraroten Wellenlängenbereich wird absorbiert. Der resultierende Temperaturunterschied beeinflusst die Polarisation des Kristalls und bewirkt eine Änderung des elektrischen Potentials, das über einen Verstärker gemessen werden kann. Handelsübliche PIR-Sensoren weisen zwei benachbarte Sensorelementen und einen Vorverstärker auf, die in einem hermetisch dichten Transistorgehäuse integriert sind. Die Sensorelemente mit einer Optik abgedeckt, die typischerweise als Fresnel-Linse aus Kunststoff ausgebildet ist.

CN 112252855 A offenbart ein elektronisches Schloss mit einem PIR-Modul und einer Videokamera. Das Schloss wird bei Detektion der Anwesenheit einer Person aufgeweckt und ein Bild oder Video der Person aufgenommen und über eine Funkdatenverbindung auf einen Server übertragen.

Ein Problem von PIR-Sensoren ist ihre große Empfindlichkeit. Beim Einbau in elektronische Schlösser von Türen in einem Flur werden Personen auch dann erkannt, wenn diese an der Tür vorbeigehen und das elektronische Schloss nicht betätigen wollen. Dies führt bei stärker frequentierten Fluren, wie z. B. in Hotels, Krankenhäusern, Pflegeeinrichtungen, Büros und dergleichen, zu einem höheren Energieverbrauch von Batterien und einer zu geringen Lebensdauer der Energieversorgung.

Aufgabe der vorliegenden Erfindung ist es, eine verbesserte Funkidentifikationseinheit und ein verbessertes elektronisches Schloss mit einer solchen Funkidentifikationseinheit zu schaffen.

Die Aufgabe wird durch die Funkidentifikationseinheit mit den Merkmalen des Anspruchs 1 und durch das elektronische Schloss mit den Merkmalen des Anspruchs 10 gelöst. Vorteilhafte Ausführungsformen sind in den Unteransprüchen beschrieben.

Es wird vorgeschlagen, dass der PIR-Sensor zwei horizontal nebeneinander angeordnete Sensorelemente mit einer auf infrarote Wellen sensitiven Sensorfläche hat, die mit einer für infrarote Wellenlängen mindestens teilweise transparenten Abdeckung überdeckt ist, wobei ein vertikaler Steg zwischen dem Paar von Sensorelementen im Zwischenraum zwischen der Abdeckung und einer die Sensorelemente tragenden Plattform des PIR-Sensors angeordnet ist.

Die Trennung eines horizontal nebeneinander angeordneten Paares von Sensorelementen und die Abdeckung der Sensorelemente reduziert die Empfindlichkeit und damit die Reichweite des PIR-Sensors und sichert zugleich eine hinreichende Sensitivität zur Erkennung einer sich auf die Funkidentifikationseinheit zu bewegende Person, um rechtzeitig vor Erreichen der Funkidentifikationseinheit den Funkidentifikationsempfänger zu aktivieren und möglichst ohne oder nur mit geringer Verzögerung die Identifikation auszulesen. Die Trennung des Paares von horizontal nebeneinander angeordneten Sensorelementen durch den zwischenliegenden vertikalen Steg reduziert die Erfassungsreichweite und erhöht die Empfindlichkeit im Nahfeld. Die Wärmestrahlung trifft insbesondere im Nahfeld im Winkel auf den Steg auf. Die Wärmestrahlung wird durch den Steg von dem Sensorelement stärker abgelenkt, welches durch den Steg der Wärmestrahlung stärker abgewandt ist. Damit kann im Nahfeld eine stärkere Temperaturdifferenz durch die beiden Sensoren detektiert werden.

Die vertikale Anordnung des Steges zur horizontalen Anordnung der beiden nebeneinander angeordneten Sensorelemente eines Paares bedeutet, dass der Steg quer zur Flucht der beiden nebeneinander angeordneten Sensorelemente, zwischen denen der Steg positioniert ist, angeordnet ist.

Unter "horizontal" wird eine im Wesentlichen waagerechte Lage verstanden, wobei eine gewisse Neigung im Toleranzbereich von bis zu etwa 20° von der Lage erfasst ist. Die vertikale Lage ist im Wesentlichen lotrecht dazu ausgerichtet, wobei auch hier eine gewisse Toleranz im Bereich von etwa 70° bis 110° zur horizontalen Lage von der vertikalen Lage erfasst ist.

Der PIR-Sensor kann zwei horizontal übereinander angeordnete Paare von Sensorelemente haben, wobei die Sensorelemente eines Paares jeweils horizontal nebeneinander angeordnet sind. Dabei können die beiden jeweils horizontal nebeneinander angeordneten Sensorelemente umgekehrt zueinander polarisiert und die vertikal übereinander liegenden Sensorelemente umgekehrt zueinander polarisiert sein.

Ein horizontaler Steg kann zwischen den Paaren von vertikal übereinander angeordneten Sensorelementen im Zwischenraum zwischen der Abdeckung und der Plattform des PIR-Sensors angeordnet sein.

Der PIR-Sensor kann vier in einer 2x2-Matrix angeordnete Sensorelemente haben. Dabei kann der PIR-Sensor mit seinen Sensorelementen diagonal angeordnet sein, wobei der horizontale Steg ein Paar von mittig vertikal übereinander liegenden Sensorelementen überdeckt. Beidseits des Steges kann jeweils ein Sensorelement des horizontal nebeneinander liegenden, nicht durch den Steg überdeckten Paares von Sensorelementen angeordnet ist.

Die Abdeckung kann aus einem Polyethylen enthaltendem Material (PE), vorzugsweise hochdichtem Polyethylen (HDPE) gebildet sein. Mit einer solchen Abdeckung kann die Erfassungsreichweite im Vergleich zu einer die Reichweite erhöhenden anderen Optik, wie insb. einer Fresnellinse, deutlich eingeschränkt werden. Die Abdeckung ist vorzugsweise eine flache bzw. plane (nicht gekrümmte) Platte, die gleichzeitig auch zum Schutz des Näherungsdetektors vor äußeren Einflüssen, insb. von Umwelteinflüssen (Staub, Feuchtigkeit, mechanische Beschädigung, dient. Die Abdeckung ist keine Linse, insbesondere keine Fresnellinse.

Der vertikale und/oder horizontale Steg kann aus einem Material gebildet sein, das infrarote Wellenlängen reflektiert und/oder absorbiert. Dabei ist ein insbesondere aus Metall gebildeter Steg vorteilhaft. Dieser kann beispielsweise aus Aluminium gebildet sein. Dies umfasst auch Aluminiumlegierungen. Der Steg kann dabei integral mit einem Rahmenteil aus demselben Material gefertigt oder in ein aus einem anderen Material, wie bspw. Kunststoff, gebildetes Rahmenteil eingebaut sein. Denkbar ist auch eine Ausbildung des Stegs aus einem Kunststoffmaterial, das metallhaltige Pigmente oder infrarote Wellenlängen reflektierende oder absorbierende Pigmente enthält oder aus einem für Wärmestrahlung undurchlässigen Kunststoffmaterial besteht.

Der Näherungsdetektor kann einen Rahmenkörper mit einem zum PIR-Sensor hin konisch zulaufenden Boden haben. Damit lässt sich der Erfassungswinkel einstellen und die Empfindlichkeit weiter auf einen verringerten Abstand zum PIR-Sensor reduzieren.

Der Steg kann einstückig mit dem Rahmenkörper ausgeformt oder mit dem Rahmenkörper verbunden sein. Der PIR-Sensor kann in dem Rahmenkörper formschlüssig aufgenommen werden. Damit lässt sich der PIR-Sensor mit seinen Sensorelementen lagesicher und stabil auf den Steg ausrichten.

Der Funkidentifikationsempfänger kann eine RFID-Leseeinheit zum Auslesen aktiver RFID-Transponder haben. Der aktive Transponder wird dabei erst nach dem Aufwecken durch den Näherungsdetektor durch Aussenden von elektromagnetischen Wellen abgefragt, so dass der Energieverbrauch reduziert wird.

Der Funkidentifikationsempfänger kann eine Nahfeldkommunikations-Leseeinheit zur Funkidentifikation von Nahfeldkommunikationstransmittern haben.

Das elektronische Schloss weist eine elektronisch betätigbare Schließeinheit und eine solche Funkidentifikationseinheit auf. Die Schließeinheit ist bei Detektion der Anwesenheit einer Person im Umfeld des Funkidentifikationsempfängers und Empfangen und Überprüfen einer Identifikation mit der Funkidentifikationseinheit aktivierbar, um das elektronische Schloss zu öffnen.

Das elektronische Schloss kann einen Türgriff, eine Schlossfalle und eine aktuatorisch betätigbare Kupplung zwischen Türgriff und Schlossfalle haben, wobei der Türgriff mit der Kupplung wahlweise mit einer Schlossfalle des elektronischen Schlosses verbindbar oder von der Schlossfalle trennbar ist. Damit kann eine mit einem solchen elektronischen Schloss ausgestattete Tür, die in die Schlossfalle gefallen und damit geschlossen ist, einfach durch Herunterdrücken des Türgriffs geöffnet werden. Dies ist allerdings nur dann möglich, wenn die Annäherung einer Person durch den PIR-Sensor detektiert, der Funkidentifikationsempfänger aufgeweckt und aktiviert und mit dem Funkidentifikationsempfänger per Funkdatenübertragung eine Identifikation der Person ausgelesen und geprüft wurde, um bei erfolgreicher Identifizierung die Kupplung zwischen Türgriff und Schlossfalle einzukoppeln.

Die Erfindung wird nachfolgend anhand eines Ausführungsbeispiels mit den beigefügten Zeichnungen näher erläutert. Es zeigen:
- Fig. 1 -: Blockdiagramm einer Funkidentifikationseinheit;
- Fig. 2 -: Frontansicht eines elektronischen Schlosses;
- Fig. 3 -: Frontansicht eines Ausschnitts des elektronischen Schlosses mit nicht abgedecktem Näherungsdetektor;
- Fig. 4 -: Draufsicht auf ein Rahmenteil mit vertikalem Steg und Schnittlinie B-B für den Näherungsdetektor;
- Fig. 5 -: Seitenschnittansicht des Rahmenteils aus Figur 4 im Schnitt B-B;
- Fig. 6 -: Draufsicht einer Halteplatte für den Näherungsdetektor mit Schnittlinie B-B;
- Fig. 7 -: Seitenschnittansicht des elektronischen Schlosses im Bereich des Näherungsdetektors im Schnitt B-B;
- Fig. 8 -: Skizze eines Näherungsdetektors mit beispielhaften Sensorausgangssignalen bei Annäherung im Abstand von 0,5 und einem Meter;
- Fig. 9 -: Skizze einer anderen Ausführungsform eines Näherungsdetektors mit Quad-PIR-Sensor und beispielhaften Sensorausgangssignalen bei Annäherung im Abstand von 0,5, 1,0 und 1,5 Meter;
- Fig. 10-: Skizze einer anderen Ausführungsform des Näherungsdetektors mit Quad-PIR-Sensor und horizontalem und vertikalem Steg;
- Fig. 11-: Skizze einer anderen Ausführungsform eines diagonal angeordneten Quad-PIR-Sensors mit horizontalem Steg.

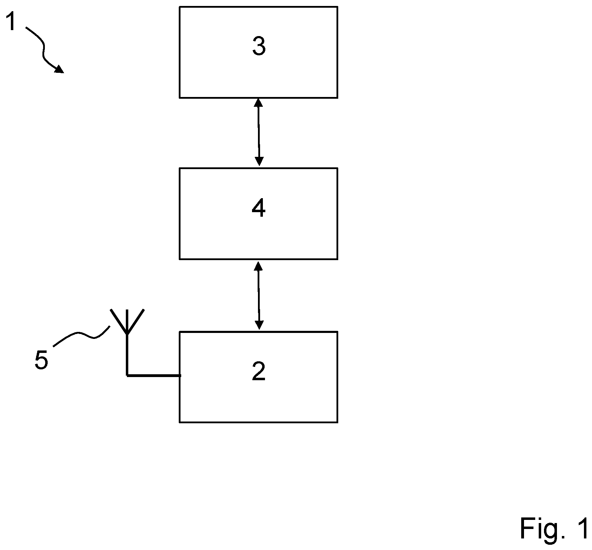

Figur 1 zeigt ein Blockdiagramm einer Funkidentifikationseinheit 1, die einen Funkidentifikationsempfänger 2 und einen Näherungsdetektor 3 aufweist. Der Näherungsdetektor 3 ist als PIR-Sensor ausgebildet und spricht bei Annäherung einer Person an, die sich dem Näherungsdetektor 3 in einem vorgegebenen Annäherungsabstand annähert. Hierzu kann ein Schwellwert vorkonfiguriert in einem programmierbaren Steuerungseinheit 4 (z. B. Mikrocontroller oder Mikroprozessor) der Funkidentifikationseinheit 1 abgespeichert werden. Die Funkidentifikationseinheit 1 hat eine Antenne 5 zum Empfang elektromagnetischer Signale. Hierbei kann ein aktiver RFID-Transponder durch ein Energiefeld angesprochen und das vom RFID-Transponder ausgesendete Identifikationssignal empfangen werden.

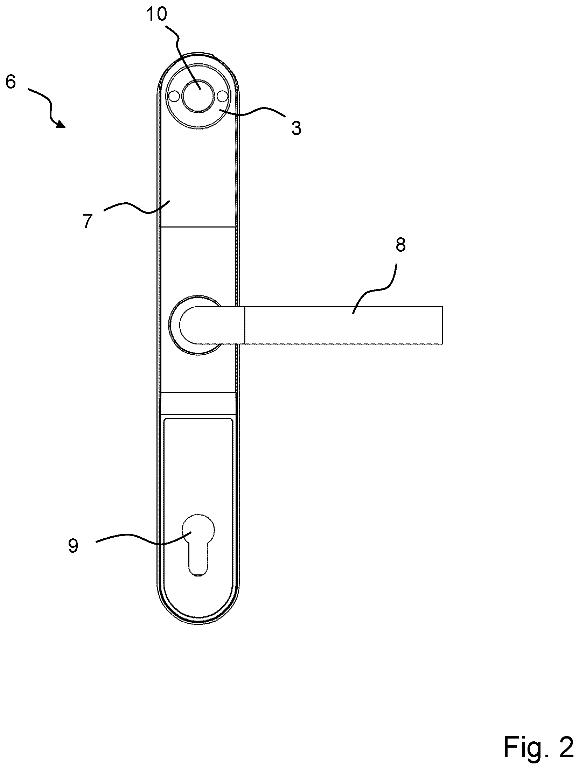

Figur 2 zeigt eine Frontansicht eines elektronischen Schlosses 6. Das elektronische Schloss hat eine Deckplatte 7, an der ein Türgriff 8 schwenkbar gelagert ist. Unterhalb des Türgriffs 8 ist eine Schlüsselöffnung 9 in die Deckplatte 7 eingebracht.

Die Deckplatte 7 weist in vertikaler Richtung oberhalb des Türgriffs 8 einen Näherungsdetektor 3 auf, der mit einer planen Abdeckplatte 10 abgedeckt ist. Die Abdeckplatte 10 ist nicht gekrümmt und nicht als Linse ausgebildet. Insbesondere ist die Abdeckplatte 10 keine Fresnellinse. Damit wird der Erfassungsbereich und die der Erfassungsabstand reduziert, in der die Annäherung einer Person an das elektronische Schloss 6 detektierbar ist.

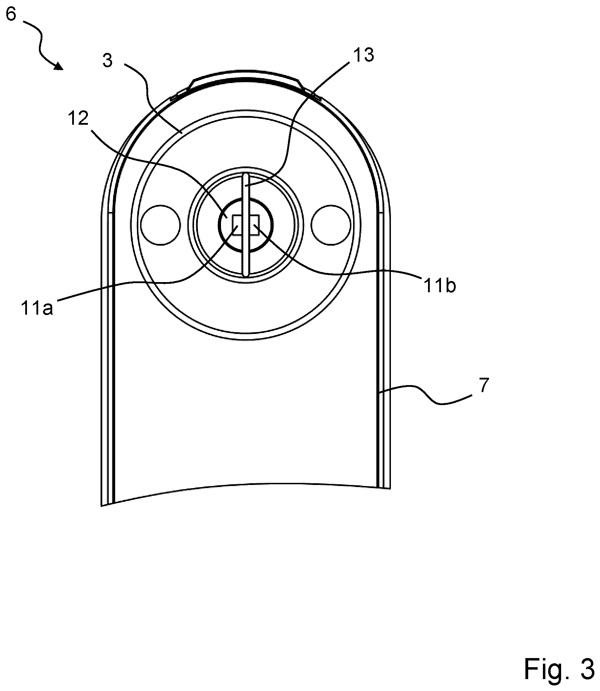

Figur 3 zeigt eine Frontansicht eines Ausschnitts des elektronischen Schlosses 6 mit nicht abgedecktem Näherungsdetektor 3. Der Näherungsdetektor 3 hat einen pyroelektrischen Sensor, d. h. einen PIR-Sensor mit mindestens zwei horizontal nebeneinander angeordnete Sensorelemente 11a, 11b auf einer Plattform 12 aufweist. Die Sensorelemente 11a, 11b sind hierzu auf einem Substrat eines in einem Gehäuse eingebauten PIR-Sensors integriert. Erkennbar, dass zwischen dem Paar von horizontal nebeneinander angeordneten Sensorelementen 11a, 11b ein Wärmestrahlung reflektierender und/oder absorbierender Steg 13 angeordnet ist. Dieser beschränkt den Erfassungswinkel der Sensorelemente 11a, 11b im Wesentlichen in horizontaler Richtung. Die Annäherung einer Person, die im Regelfall nicht direkt frontal von vorne erfolgt, führt damit zu einer unterschiedlichen Intensität des Einfalls von infraroter Wärmestrahlung auf die beiden Sensorelemente 11a, 11b. Die Differenz wird als Sensorsignal verstärkt und ausgegeben, um bei Überschreiten eines je nach gewünschter Ansprechempfindlichkeit bzw. Auslöseabstands vorgegebenen Schwellwertes ein den Funkidentifikationsempfänger 2 aktivierendes Aktivierungssignal auszugeben.

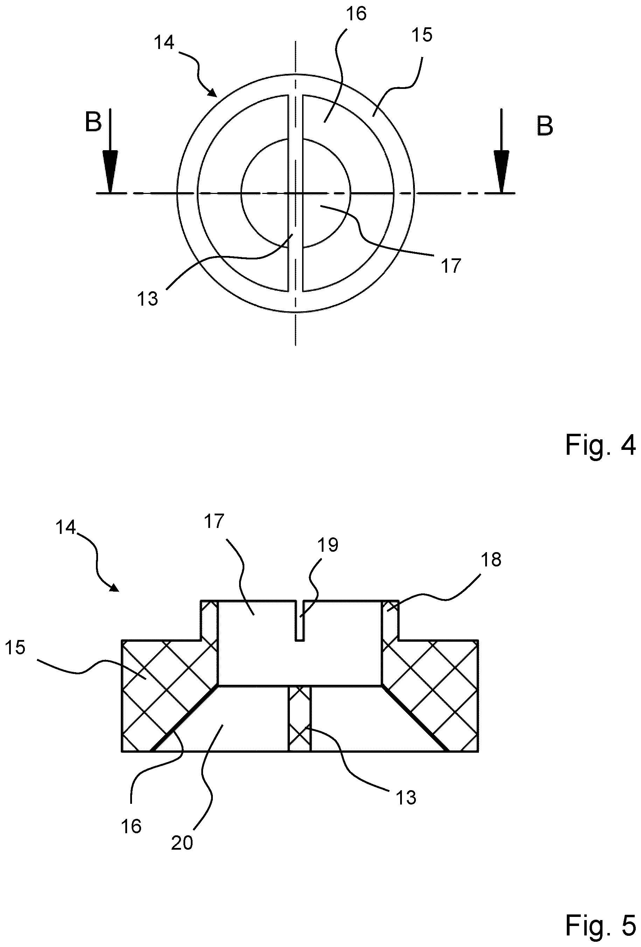

Figur 4 zeigt eine Draufsicht auf ein Rahmenteil 14 des Näherungsdetektors 3 und der Schnittlinie B-B. Das Rahmenteil 14 hat einen vertikalem Steg 13, der sich zwischen einem zylinderförmigen Rahmenkörper 15 in vertikaler Richtung erstreckt. Der zylinderförmige Rahmenkörper 15 hat einen konisch geneigten Boden 16, und einer zentralen Öffnung 17 in dem Boden 16. Ein zylinderförmiges Gehäuse eines PIR-Sensors kann in der zentralen Öffnung 17 eingesetzt werden. Damit wird das Rahmenteil 14 mit seinem Steg 13 lagerichtig an dem PIR-Sensor festgelegt.

Figur 5 zeigt eine Seitenschnittansicht des Rahmenteils 14 im Schnitt B-B. Erkennbar ist, dass der Rahmenkörper 15 des Rahmenteils 14 einen zur Öffnung 17 hin trichterförmig verjüngten, d. h. konisch zur Öffnung 17 hin zulaufenden Boden 16 hat. Durch die Abmaße des Rahmenteils 14 und der Trichterform kann der Erfassungswinkel bedarfsgerecht werksseitig eingestellt werden. An den Rahmenkörper 15 schließt sich ein rohrförmiger Ansatz 18 an, der die zentrale kreisförmige Öffnung 17 umgrenzt. Der Ansatz 18 kann einen Schlitz 19 aufweisen, in den eine Fahne des PIR-Sensors hineinragen kann, um den PIR-Sensor lagerichtig mit einer Ausrichtung der horizontal nebeneinander angeordneten Sensorelemente 11a, 11b eines Paares quer zu der Erstreckungsrichtung des Steges 13 zu montieren.

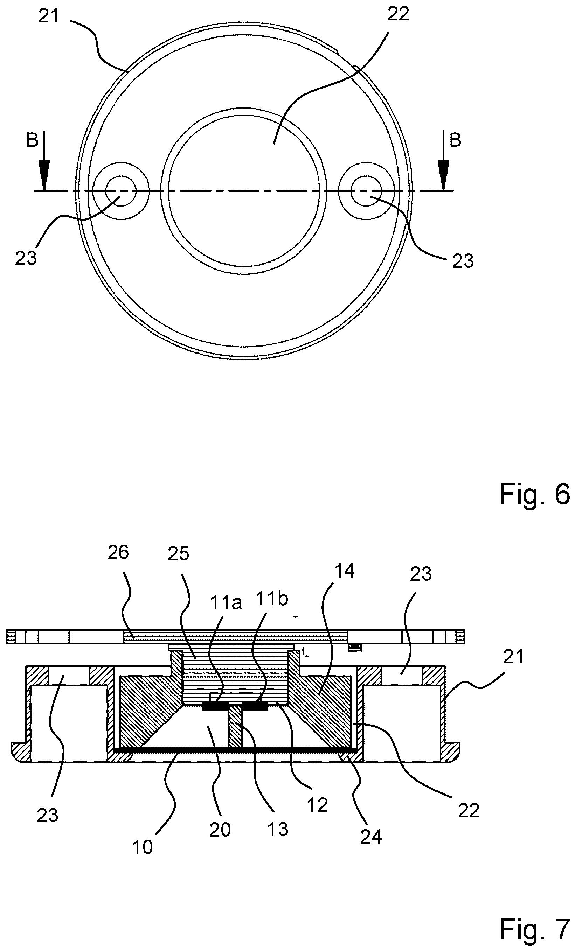

Figur 6 zeigt eine Draufsicht einer Halteplatte 21 für den Näherungsdetektor 3 mit Schnittlinie B-B. Die Halteplatte 21 hat eine zentrale Durchgangsöffnung 22 und zwei auf der gemeinsamen Schnittlinie B-B angeordnete Befestigungsbohrungen 23.

Figur 7 zeigt eine Seitenschnittansicht des elektronischen Schlosses 1 im Bereich des Näherungsdetektors 3 im Schnitt B-B. Die Halteplatte 21 hat einen umlaufenden Kragen 24, der in die Durchgangsöffnung 22 hineinragt. Auf dem Kragen 24 liegt die Abdeckplatte 10 auf. Das Rahmenteil 14 ist in der Durchgangsöffnung 22 aufgenommen und auf der Abdeckplatte 10 aufgelagert. Der Steg 13 des Rahmenteils 14 erstreckt sich von der Abdeckplatte 10 bis zu der Plattform 12 des PIR-Sensors 25, auf der die Sensorelemente 11a, 11b aufgebracht sind. Der Steg befindet sich zwischen dem Paar von nebeneinander angeordneten Sensorelementen 11a, 11b und erstreckt sich quer zur Ebene der Plattform 12 und der Abdeckplatte 10 in dem Zwischenraum 20. Der PIR-Sensor 25 ist auf eine elektronische Leiterplatte 26 aufgelötet und in der Öffnung 17 des Rahmenteils 14 aufgenommen.

Die Abdeckplatte 10 kann ein vom Rahmenteil 14 separates Teil sein. Denkbar ist aber auch, dass die Abdeckplatte 10 integral mit dem Rahmenteil 14 z. B. als Polyethylen-Spritzgussteil gefertigt ist.

Der Wärmestrahlung reflektierende und/oder absorbierende Steg 13 kann als separates Teil des Rahmenteils 14 z. B. aus einem anderen Material gefertigt sein. Ein metallischer Steg 13, wie z. B. ein poliertes Aluminiumblechteil, kann durch Spiegelung zusätzlich einen optischen Gewinn erreichen. Vorteilhaft ist aber auch, das Rahmenteil 14 einstückig als Metallteil mit dem Steg 13 zu fertigen. Der Steg 13 und das Rahmenteil 14 können alternativ hierzu auch aus einem für infrarote Strahlung weitestgehend undurchlässigem Kunststoffmaterial gefertigt werden.

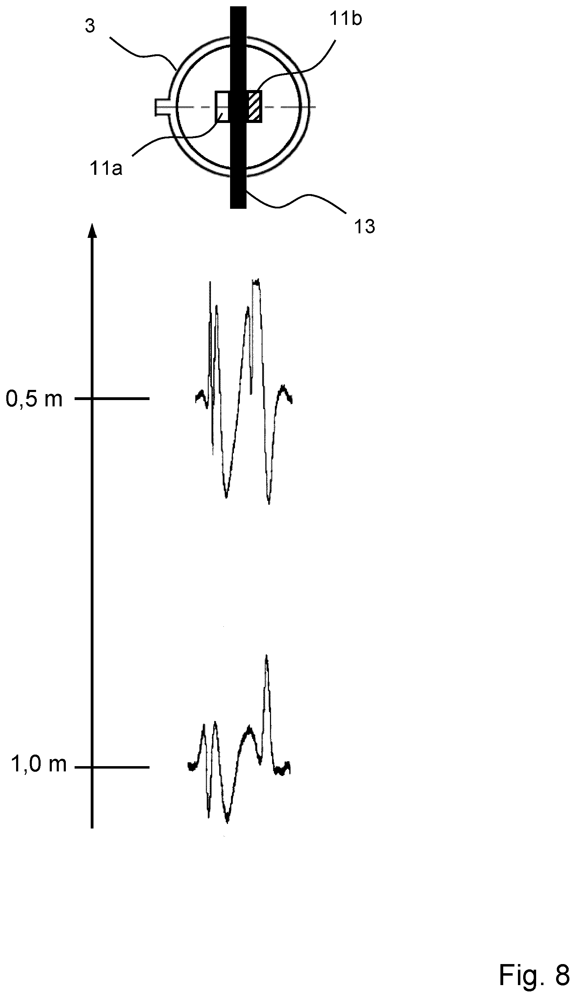

Figur 8 zeigt einen Näherungsdetektor 3 mit zwei horizontal nebeneinander angeordneten Sensorelementen 11a, 11b und dem vertikal hierzu zwischen den Sensorelementen 11a, 11b angeordneten Steg 13. Der vertikale Steg 13 erstreckt sich quer zu der Flucht des Paares von nebeneinander angeordneten Sensorelementen 11a, 11b.

Es sind beispielhaft zwei Sensorausgangssignale gezeigt, die bei Annäherung im lotrechten Abstand von 0,5 m und 1 m zum PIR-Sensor 25 bzw. seiner die Sensorelemente 11a, 11b tragenden Plattform 12 gemessen wurden. Die Sensorelemente 11a, 11b eines Paares sind dabei umgekehrt polarisiert voneinander, wie durch die weiße Fläche für eine Polarisation und die diagonal schraffierte Fläche für die entgegengesetzte Polarisation angedeutet ist. Damit löschen sich die Signale bei frontaler Annäherung von vorne aus und es wird ein Differenzsignal der beiden einzelnen Sensorsignale der Sensorelemente 11a, 11b gebildet und vom Vorverstärker des PIR-Sensors verstärkt. Dargestellt ist ein Sensorausgangssignal über die Zeit bei Annäherung einer Person mit normaler Gehgeschwindigkeit an eine mit der Funkidentifikationseinheit 1 ausgerüsteten Tür. Der Näherungsdetektor 3 ist dabei etwa auf einer Höhr von 1,15 m über dem Boden angebracht.

Es wird deutlich, dass die Empfindlichkeit des PIR-Sensors 25 deutlich, wie gewünscht und für die energiesparende Ansteuerung einer Funkidentifikationseinheit 1 sinnvoll reduziert wird, so dass das verstärkte Sensorausgangssignal bei einem Abstand von einem Meter eine deutlich geringere Amplitude hat, als bei einem Abstand von 0,5 Meter. Wenn die Funkidentifikationseinheit 1 bei Annäherung im Abstand von etwa 0,5 m aufgeweckt wird, bleibt ausreichend Zeit, um einen RFID-Transponder im Nahfeld anzusprechen, die Identifikation auszulesen und zu überprüfen und das elektronische Schloss 6 einzukoppeln, so dass die berechtigte Person bei Erreichen der Tür verzögerungsfrei den Türgriff betätigen und die Tür öffnen kann.

Ein Problem herkömmlicher PIR-Sensoren 25 liegt darin, dass die Sensorsignale der umgekehrt polarisierten Sensorelemente der nebeneinander liegenden Sensorelemente 11a, 11b nicht einzeln ausgelesen werden können. Vielmehr sind die Sensorelemente 11a, 11b der PIR-Sensoren 25 so integriert und mit einem Vorverstärker verbunden, dass nur ein Sensorausgangssignal bereitgestellt wird, das keine physikalische Einstellung der Empfindlichkeit erlaubt.

Mit Hilfe des zwischenliegenden Steges 13 zur Trennung der Erfassungsbereiche der beiden zusammengeschalteten Sensorelemente 11a, 11b kann die Empfindlichkeit des PIR-Sensors 25 nunmehr so eingestellt werden, dass sie eine energiesparende Aktivierung nur bei Annäherung im gewünschten Nahbereich zuverlässig sicherstellt.

Die Abdeckplatte 10 bildet zusammen mit dem vertikalen Steg 13 einen Separator, durch den die Erfassungsreichweite begrenzt und für die beiden Sensorelemente 11a, 11b des Dual-PIR-Sensors 25 jeweils auf die rechte bzw. linke Seite einschränkt. Ob ein digitaler oder analoger Sensor verwendet wird, spielt dabei prinzipiell keine Rolle.

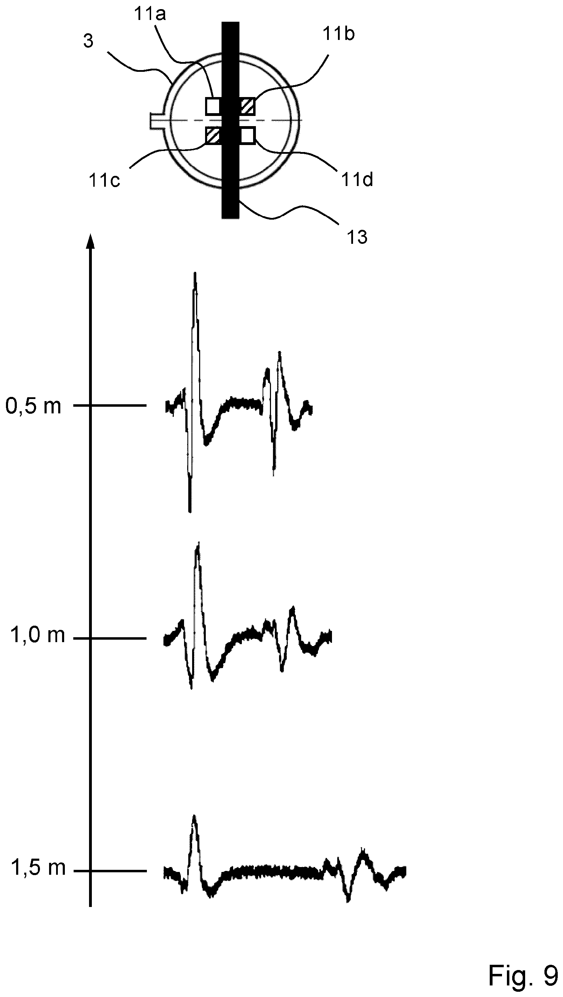

Figur 9 zeigt eine Skizze einer anderen bevorzugten Ausführungsform eines Näherungsdetektors 3 mit Quad-PIR-Sensor 25 und beispielhaften Sensorausgangssignalen bei Annäherung im Abstand von 0,5, 1,0 und 1,5 Meter. Bei dieser Ausführungsform hat der Quad-PIR-Sensor 25 vier in einer 2x2-Matrix angeordnete Sensorelemente 11a, 11b, 11c, 11d. Es sind auf einer horizontalen Flucht jeweils ein Paar von umgekehrt zueinander polarisierten Sensorelementen 11a, 11b und 11c, 11d angeordnet. Die vertikal nebeneinander liegenden Sensorelemente 11a, 11c und 11b, 11d sind ebenso umgekehrt zueinander polarisiert. Im Zwischenraum zwischen jeweils zwei Sensorelementen 11a, 11b; 11c, 11d eines Paares ist ein vertikaler Steg 13 angeordnet. Die Verwendung eines solchen Quad-PIR-Sensors 25 erscheint zunächst ungeeignet, da die Signale der beiden übereinander, umgekehrt polarisierten, liegenden Sensorelemente 11a, 11c bzw. 11b, 11d sich mindestens teilweise auslöschen.

Es hat sich aber gezeigt, dass sich eine deutliche Zunahme der Signalamplitude vom Abstand von 1,5 Metern zu einem Abstand von 0,5 Metern ergibt, so dass die Empfindlichkeit mit zunehmendem Abstand signifikant reduziert ist. Ebenso unterscheidet sich die Signalcharakteristik mit dem ersten Signalpeak und dem zeitlich nachgelagerten Signalpeak bei zunehmendem Abstand deutlich. Auch dieses Zeit- und Signalverhalten kann zur Signalauswertung zur Annäherungsdetektion im Nahbereich ausgenutzt werden.

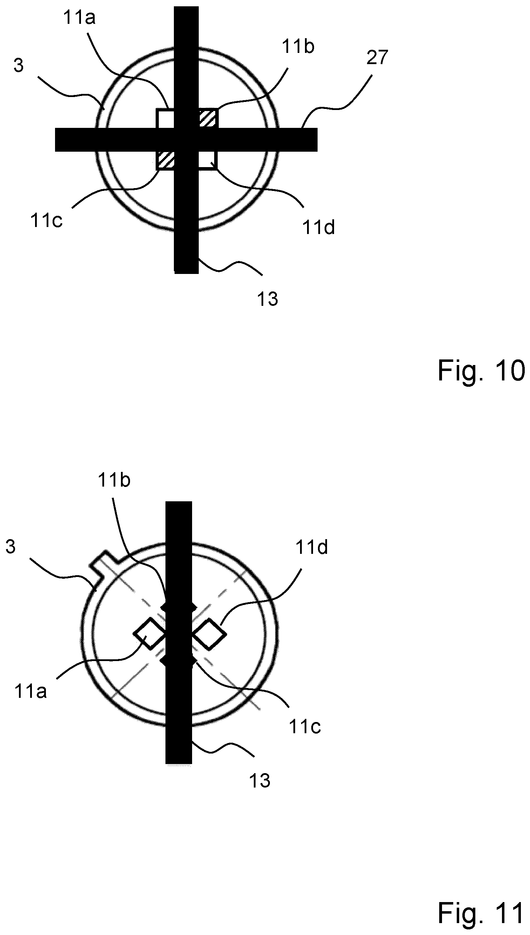

Figur 10 zeigt eine andere Ausführungsform eines Näherungsdetektors 3 mit Quad-PIR-Sensor 25, bei die beiden Paare von horizontal nebeneinander angeordneten Sensorelemente 11a, 11b und 11c, 11d durch einen zusätzlichen horizontalen Steg 27 voneinander separiert sind.

Bei der Verwendung eines solchen Quad-PIR-Sensors 25 kann es aber auch vorteilhaft sein, entweder die obere oder untere horizontale Zeile von Sensorelementen 11a, 11b bzw. 11c, 11d abzudecken, um nur mit einem Paar von Sensorelementen 11a, 11b oder 11c, 11d zu messen. Dies kann durch teilweises Schließen der Öffnung 17 des Rahmenteils 14 erreicht werden.

Figur 11 zeigt eine andere Ausführungsform eines Näherungsdetektors 3 mit einem Quad-PIR-Sensor 25, der diagonal zur vertikalen Ausrichtung des Steges 13 angeordnet ist. Dabei verdeckt der vertikale Steg 13 die beiden nun vertikal übereinander positionierten Sensorelemente 11b und 11c oder 11a und 11d. Diese sind in der Regel gleichgesinnt polarisiert. Damit befindet sich der Steg zwischen den nun horizontal nebeneinander angeordneten Sensorelementen 11a, 11d bzw. 11b, 11c. Diese beiden nicht durch den Steg 13 verdeckten Sensorelemente 11a, 11d oder 11b, 11c sind in der Regel gleichgesinnt polarisiert. Damit kann ein von der ersten Ausführungsform mit einem Dual-PIR-Sensor 25 abweichendes Sensorausgangssignal erreicht werden, mit dem die Erfassung einer Annäherung einer Person dennoch auf den Nahbereich des Näherungsdetektors 3 begrenzbar ist.

### Bezugszeichenliste

- 1: Funkidentifikationseinheit
- 2: Funkidentifikationsempfänger
- 3: Näherungsdetektor
- 4: Steuerungseinheit
- 5: Antenne
- 6: elektronisches Schloss
- 7: Deckplatte
- 8: Türgriffs
- 9: Schlüsselöffnung
- 10: Abdeckplatte
- 11a, 11b: Sensorelemente
- 12: Plattform
- 13: vertikaler Steg
- 14: Rahmenteil
- 15: Rahmenkörper
- 16: Boden
- 17: Öffnung
- 18: rohrförmiger Ansatz
- 19: Schlitz
- 20: Zwischenraum
- 21: Halteplatte
- 22: Durchgangsöffnung
- 23: Befestigungsbohrung
- 24: Kragen
- 25: PIR-Sensor
- 26: Leiterplatte
- 27: horizontaler Steg

## Patentansprüche

1. Funkidentifikationseinheit (1) mit einem Funkidentifikationsempfänger (2) und einem mit dem Funkidentifikationsempfänger (2) verbundenen Näherungsdetektor (3), wobei der Näherungsdetektor (3) einen pyroelektrischen PIR-Sensor (25) zur Detektion der Annäherung eines im Umfeld des Funkidentifikationsempfängers (2) befindlichen Person hat und zur Aktivierung des Funkidentifikationsempfängers (2) bei detektierter Annäherung einer Person an den Näherungsdetektor (3) ausgebildet ist, **dadurch gekennzeichnet, dass** der PIR-Sensor (25) zwei horizontal nebeneinander angeordnete Sensorelemente (11a, 11b und/oder 11c, 11d) mit einer auf infrarote Wellen sensitiven Sensorfläche hat, die mit einer für infrarote Wellenlängen mindestens teilweise transparenten Abdeckung (10) überdeckt ist, wobei ein vertikaler Steg (13) zwischen dem Paar von Sensorelementen (11a, 11b bzw. 11c, 11d bzw. 11a, 11d) im Zwischenraum zwischen der Abdeckung und einer die Sensorelemente (11a, 11b, 11c, 11d) tragenden Plattform (12) des PIR-Sensors (25) angeordnet ist.

2. Funkidentifikationseinheit (1) nach Anspruch 1, **dadurch gekennzeichnet, dass** der PIR-Sensor (25) zwei horizontal übereinander angeordnete Paare von Sensorelementen (11a, 11b und 11c, 11d) hat, wobei die Sensorelemente (11a, 11b bzw. 11c, 11d) eines Paares jeweils horizontal nebeneinander angeordnet sind.

3. Funkidentifikationseinheit (1) nach Anspruch 2, **dadurch gekennzeichnet, dass** die beiden jeweils horizontal nebeneinander angeordneten Sensorelemente (11a, 11b bzw. 11c, 11d) umgekehrt zueinander polarisiert sind und die vertikal übereinander liegenden Sensorelemente (11a, 11c bzw. 11b, 11d) umgekehrt zueinander polarisiert sind.

4. Funkidentifikationseinheit (1) nach Anspruch 2 oder 3, **dadurch gekennzeichnet, dass** ein horizontaler Steg (27) zwischen den Paaren von vertikal übereinander angeordneten Sensorelementen (11a, 11b bzw. 11c, 11d) im Zwischenraum zwischen der Abdeckung (10) und der Plattform (12) des PIR-Sensors (25) angeordnet ist.

5. Funkidentifikationseinheit (1) nach Anspruch 1, **dadurch gekennzeichnet, dass** der PIR-Sensor (25) vier in einer 2x2-Matrix angeordnete Sensorelemente (11a, 11b, 11c, 11d) hat, wobei der PIR-Sensor (25) mit seinen Sensorelementen (11a, 11b, 11c, 11d) diagonal angeordnet ist, der vertikale Steg (13) ein Paar von mittig vertikal übereinander liegenden Sensorelementen (11b, 11c bzw. 11a, 11d) überdeckt und beidseits des vertikalen Steges (13) jeweils ein Sensorelement (11a, 11d bzw. 11b, 11c) des horizontal nebeneinander liegenden, nicht durch den Steg (13) überdeckten Paares von Sensorelementes (11a, 11d bzw. 11c, 11c) angeordnet ist.

6. Funkidentifikationseinheit (1) nach einem der vorhergehenden Ansprüche, **dadurch gekennzeichnet, dass** die Abdeckung (10) aus Polyethylen-haltigem Material (PE), vorzugsweise hochdichtem Polyethylen (HDPE) gebildet ist.

7. Funkidentifikationseinheit (1) nach einem der vorhergehenden Ansprüche, **dadurch gekennzeichnet, dass** die Abdeckung (10) eine plane Abdeckplatte ist.

8. Funkidentifikationseinheit (1) nach einem der vorhergehenden Ansprüche, **dadurch gekennzeichnet, dass** der Steg (13) aus infrarote Wellenlängen reflektierenden und/oder absorbierenden Material gebildet ist, insbesondere aus Metall, wie Aluminium, oder aus einem metallhaltige oder infrarote Wellenlängen reflektierende oder absorbierende Pigmente enthaltendem Kunststoff.

9. Funkidentifikationseinheit (1) nach einem der vorhergehenden Ansprüche, **dadurch gekennzeichnet, dass** der Näherungsdetektor (3) einen Rahmenkörper (15) mit einem zum PIR-Sensor (25) hin konisch zulaufenden Boden (16) hat.

10. Funkidentifikationseinheit (1) nach einem der vorhergehenden Ansprüche, **dadurch gekennzeichnet, dass** der Steg (13) einstückig mit dem Rahmenkörper (15) ausgeformt oder mit dem Rahmenkörper (15) verbunden ist.

11. Funkidentifikationseinheit (1) nach einem der vorhergehenden Ansprüche, **dadurch gekennzeichnet, dass** der Funkidentifikationsempfänger (2) eine RFID-Leseeinheit zum Auslesen aktiver RFID-Transponder hat.

12. Funkidentifikationseinheit (1) nach einem der vorhergehenden Ansprüche, **dadurch gekennzeichnet, dass** der Funkidentifikationsempfänger (2) eine Nahfeldkommunikations-Leseeinheit zur Funkidentifikation von Nahfeldkommunikationstransmittern hat.

13. Funkidentifikationseinheit (1) nach einem der vorhergehenden Ansprüche, **dadurch gekennzeichnet, dass** die Funkidentifikationseinheit (1) eine Batterie zur Energieversorgung hat.

14. Elektronisches Schloss (6) mit einer elektronisch betätigbaren Schließeinheit und mit einer Funkidentifikationseinheit (1) nach einem der vorhergehenden Ansprüche, **dadurch gekennzeichnet, dass** die Schließeinheit bei Detektion der Anwesenheit einer Person im Umfeld des Funkidentifikationsempfängers (2) und Empfangen und Überprüfen einer Identifikation mit der Funkidentifikationseinheit (1) aktivierbar ist, um das elektronische Schloss (6) zu öffnen.

15. Elektronisches Schloss (6) nach Anspruch 14, **gekennzeichnet durch** einen Türgriff (8), einer Schlossfalle und eine aktuatorisch betätigbaren Kupplung zwischen Türgriff (8) und Schlossfalle, wobei der Türgriff (8) mit der Kupplung wahlweise mit einer Schlossfalle des elektronischen Schlosses (6) verbindbar oder von der Schlossfalle trennbar ist.
